(19) Europäisches Patentamt / European Patent Office / Office européen des brevets

(11) **EP 3 145 011 B1**

(12) **FASCICULE DE BREVET EUROPEEN**

(45) Date de publication et mention
de la délivrance du brevet:
**13.06.2018 Bulletin 2018/24**

(21) Numéro de dépôt: **16189559.4**

(22) Date de dépôt: **20.09.2016**

(51) Int Cl.:
*H01M 8/04298* (2016.01)   *H01M 8/0432* (2016.01)
*H01M 8/04537* (2016.01)   *H01M 8/04701* (2016.01)
*H01M 8/241* (2016.01)   *H01M 8/0267* (2016.01)
*H01M 8/0247* (2016.01)   *H01M 8/0265* (2016.01)
*H01M 8/0254* (2016.01)

(54) **DÉTERMINATION D'UNE DISTRIBUTION SPATIALE D'UN PARAMÈTRE D'ÉVACUATION THERMIQUE D'UNE CELLULE ÉLECTROCHIMIQUE**

**BESTIMMUNG EINER RÄUMLICHEN VERTEILUNG EINES PARAMETERS DER WÄRMEABGABE EINER ELEKTROCHEMISCHEN ZELLE**

**DETERMINATION OF A SPATIAL DISTRIBUTION OF A HEAT-DISCHARGE PARAMETER OF AN ELECTROCHEMICAL CELL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2015 FR 1558897**

(43) Date de publication de la demande:
**22.03.2017 Bulletin 2017/12**

(73) Titulaire: **Commissariat à l'énergie atomique et aux énergies alternatives
75015 Paris (FR)**

(72) Inventeurs:
• **Poirot-Crouvezier, Jean-Philippe
38450 Saint Georges de Commiers (FR)**
• **Nandjou Dongmeza, Fredy-Intelligent
38100 Grenoble (FR)**
• **Gerard, Mathias
38100 Grenoble (FR)**
• **Robin, Christophe
38000 Grenoble (FR)**

(74) Mandataire: **GIE Innovation Competence Group
310, avenue Berthelot
69372 Lyon Cedex 08 (FR)**

(56) Documents cités:
**JP-A- 2000 090 943      US-A1- 2005 266 296
US-A1- 2006 046 117      US-A1- 2008 008 916
US-A1- 2008 280 177      US-A1- 2015 171 436**

• **CHRISTOPHE ROBIN ET AL: "Development and experimental validation of a PEM fuel cell 2D-model to study heterogeneities effects along large-area cell surface", INTERNATIONAL JOURNAL OF HYDROGEN ENERGY., vol. 40, no. 32, 7 juillet 2015 (2015-07-07), pages 10211-10230, XP055237638, GB ISSN: 0360-3199, DOI: 10.1016/j.ijhydene.2015.05.178**
• **JABBOUR LARA ET AL: "Feasibility of in-plane GDL structuration: Impact on current density distribution in large-area Proton Exchange Membrane Fuel Cells", JOURNAL OF POWER SOURCES, vol. 299, 15 septembre 2015 (2015-09-15), pages 380-390, XP029297457, ISSN: 0378-7753, DOI: 10.1016/J.JPOWSOUR.2015.09.043**

**Description**

**DOMAINE TECHNIQUE**

Le domaine de l'invention est celui des réacteurs électrochimiques comportant un empilement de cellules électrochimiques, tels que les piles à combustible et les électrolyseurs, et plus précisément celui des procédés de détermination d'un paramètre représentatif de l'évacuation locale de chaleur au sein de la cellule électrochimique permettant par exemple d'homogénéiser la distribution spatiale de température de la cellule en fonctionnement, ainsi que celui des procédés de réalisation d'une plaque bipolaire de cellule électrochimique.

**ÉTAT DE LA TECHNIQUE ANTÉRIEURE**

Un réacteur électrochimique tel qu'une pile à combustible ou un électrolyseur comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, et le comburant (l'oxygène), par exemple contenu dans de l'air, est amené au contact de la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte éventuellement sous forme d'une membrane polymère, et un conducteur électronique formé par le circuit électrique externe. L'empilement de cellules est ainsi le lieu de la réaction électrochimique, ce qui nécessite d'apporter les espèces réactives, d'évacuer les produits et les espèces non réactives ainsi que la chaleur produite.

Les cellules sont habituellement séparées les unes des autres par des plaques bipolaires qui assurent l'interconnexion électrique des cellules. Les plaques comportent un circuit de distribution du carburant formé sur une face anodique et un circuit de distribution du comburant formé sur une face cathodique opposée à la face anodique. Chaque circuit de distribution est un réseau de canaux parallèles entre eux adaptés à amener l'espèce réactive à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

Le document FR2976732 décrit une cellule électrochimique réalisée de manière à obtenir un échauffement local homogène au sein de la cellule en fonctionnement. L'échauffement dépend de la densité de courant électrique en chaque point de la cellule qui est elle-même fonction de la pression partielle d'espèce réactive. En effet, considérant ici le côté cathodique de la cellule, la quantité d'oxygène contenu dans le gaz circulant dans le circuit de distribution diminue progressivement à mesure que l'oxygène est consommé par la cellule, ce qui entraîne une variation spatiale de la densité de courant électrique produit par la cellule, et donc une variation spatiale de l'échauffement de la cellule. Pour éviter cette inhomogénéité spatiale de l'échauffement de la cellule, la conductivité électrique entre la plaque bipolaire amenant l'oxygène et la cellule est ajustée localement de manière à compenser la diminution de la pression partielle d'oxygène.

Cependant, il reste à améliorer encore l'homogénéisation de la distribution spatiale de la température effective de la cellule électrochimique, de manière à préserver la durée de vie de la cellule en limitant la cinétique des réactions de dégradations des différents éléments de la cellule et en réduisant les contraintes mécaniques d'origine thermique susceptibles de fragiliser la tenue mécanique des éléments de la cellule.

**EXPOSÉ DE L'INVENTION**

L'invention a pour objectif de remédier au moins en partie aux inconvénients de l'art antérieur, et plus particulièrement de proposer un procédé de détermination de la distribution spatiale d'un paramètre représentatif d'une évacuation locale de chaleur d'une cellule électrochimique permettant notamment d'homogénéiser la température locale de la cellule électrochimique en fonctionnement et ainsi de préserver la durée de vie de cette dernière.

L'invention propose à cet effet un procédé de détermination d'une distribution spatiale d'un paramètre d'intérêt représentatif d'une évacuation de chaleur au sein d'une plaque bipolaire d'une cellule électrochimique, ladite cellule comportant deux électrodes séparées l'une de l'autre par un électrolyte et disposées entre des plaques bipolaires adaptées à amener des espèces réactives aux électrodes et à évacuer de la chaleur produite par la cellule en fonctionnement, comprenant les étapes suivantes :

i) fourniture d'une cellule électrochimique, au sein de laquelle le paramètre d'intérêt est réparti selon une distribution spatiale initiale, pour laquelle la distribution spatiale d'une température au sein de la cellule électrochimique en fonctionnement présente au moins une valeur locale supérieure ou égale à une valeur locale maximale prédéterminée ;

ii) définition d'une distribution spatiale d'une température de consigne au sein de la cellule en fonctionnement, telle que les valeurs locales de température sont inférieures à des valeurs locales maximales prédéterminées ;

iii) mesure d'une distribution spatiale d'une première grandeur thermique représentative d'une production locale d'énergie thermique au sein de ladite cellule électrochimique en fonctionnement ;

iv) estimation d'une distribution spatiale d'une seconde grandeur thermique représentative d'un débit local d'un fluide caloporteur dans un circuit de refroidissement d'une plaque bipolaire de la cellule électrochimique en fonctionnement, en fonction de ladite distribution spatiale de la température de consigne et de ladite distribution spatiale de la première grandeur thermique, de sorte que la distribution spatiale de température de ladite cellule électrochimique en fonctionnement, dont la première grandeur thermique présente ladite distribution spatiale mesurée et la seconde grandeur thermique présente ladite distribution spatiale estimée, soit sensiblement égale à celle de la température de consigne ;

v) détermination d'une distribution spatiale du paramètre d'intérêt en fonction de la distribution spatiale estimée de la seconde grandeur thermique,

et dans lequel l'étape d'estimation d'une distribution spatiale de la seconde grandeur thermique comporte

- une phase de réalisation d'un maillage d'un circuit de refroidissement d'au moins une plaque bipolaire de la cellule électrochimique dans lequel est destiné à s'écouler un fluide caloporteur;
- une phase de simulation numérique par ordinateur de la seconde grandeur thermique, sur ledit maillage, par résolution d'un modèle numérique discret exprimant la seconde grandeur thermique en fonction de la température locale et de la première grandeur thermique.

On obtient ainsi une distribution spatiale du paramètre d'intérêt, dont la prise en compte dans la cellule électrochimique considérée, permet à celle-ci, en fonctionnement, de présenter une distribution spatiale de température correspondant sensiblement à celle de la température de consigne. On évite ainsi que la cellule électrochimique en fonctionnement présente alors des zones dans lesquelles la température serait localement supérieure à des valeurs locales maximales prédéterminées.

La fourniture de la cellule électrochimique peut comporter une phase de réalisation expérimentale ou de modélisation numérique d'une cellule électrochimique, une phase de mesure de la distribution spatiale de la température au sein de la cellule électrochimique en fonctionnement, puis une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées. Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

La définition de la température de consigne peut être effectuée de sorte que les valeurs locales de température sont inférieures aux valeurs locales maximales correspondantes. La température de consigne peut présenter des valeurs locales sensiblement constantes, voire un gradient local de température sensiblement constant. Elle peut présenter des valeurs locales non constantes au sein de la distribution spatiale, qui restent inférieures à ces valeurs maximales prédéterminées. Elle peut également présenter un gradient local non constant au sein de la distribution spatiale, qui reste inférieur à des valeurs maximales prédéterminées.

La mesure de la distribution spatiale de la première grandeur thermique peut être une mesure expérimentale effectuée sur la cellule électrochimique considérée préalablement fabriquée, ou une mesure numérique effectuée sur un modèle numérique de la cellule électrochimique considérée. La première grandeur thermique peut être une production locale d'énergie thermique au sein de la cellule en fonctionnement.

L'estimation de la distribution spatiale de la seconde grandeur thermique comporte :

- une phase de réalisation d'un maillage, par exemple bidimensionnel ou tridimensionnel, d'un circuit de refroidissement d'au moins une plaque bipolaire de la cellule électrochimique dans lequel est destiné à s'écouler un fluide caloporteur, et
- une phase de simulation numérique par ordinateur de la seconde grandeur thermique, sur ledit maillage, par résolution d'un modèle numérique discret reliant la seconde grandeur thermique à la température locale et à la première grandeur thermique.

Dans ce cas, le modèle numérique prend en compte la distribution spatiale de la température de consigne et la distribution spatiale préalablement mesurée de la première grandeur thermique. Le modèle numérique discret, dit électrochimique, peut être une relation reliant un paramètre représentatif de l'évacuation locale de chaleur, par exemple le débit local du fluide caloporteur, à la température locale et à un paramètre représentatif de la production locale de chaleur, par exemple le flux local de chaleur.

Ainsi, la cellule électrochimique, dont la distribution spatiale du paramètre d'intérêt a été obtenue par le procédé de détermination, présente en fonctionnement une distribution spatiale de température sensiblement égale à celle de la température de consigne. On évite ainsi la génération de nouveaux points chauds ou nouvelles inhomogénéités de température, non voulus, qui pourraient apparaître si la distribution spatiale du paramètre d'intérêt était déterminée par une approche essentiellement thermique, c'est-à-dire sur la base d'une comparaison de la température réelle qui présente des points chauds ou inhomogénéités, et de la température de consigne.

De préférence, le paramètre d'intérêt est une résistance hydraulique ou un coefficient géométrique de pertes de charge singulière au sein d'un circuit de refroidissement d'au moins l'une des plaques bipolaires dans lequel est destiné à circuler un fluide caloporteur.

De préférence, les plaques bipolaires sont formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement. Les faces externes des tôles sont orientées vers une électrode de cellule électrochimique. Les canaux de refroidissement communiquent fluidiquement entre eux dans le sens où, entre l'entrée et la sortie du circuit de refroidissement, ils forment un réseau fluidique bidimensionnel, c'est-à-dire non linéaire.

De préférence, l'étape de détermination de la distribution spatiale du paramètre d'intérêt est effectuée en fonction, également, d'une valeur prédéterminée de puissance électrique globale de la cellule électrochimique. Il est alors possible de gérer à la fois la température locale au sein de la cellule électrochimique, dans le but d'en optimiser la durée de vie, tout en maintenant une puissance électrique voulue.

De préférence, la première grandeur thermique est une température locale effective mesurée au sein de la cellule en fonctionnement, et la seconde grandeur thermique est une grandeur de comparaison représentative d'un écart local entre la température effective et la température de consigne.

De préférence, l'étape v) comporte :

- une sous-étape dans laquelle on identifie au moins une zone de la cellule où la seconde grandeur thermique présente une valeur locale estimée supérieure à une valeur seuil prédéterminée ;
- une sous-étape dans laquelle on détermine la distribution spatiale du paramètre d'intérêt par modification de sa valeur initiale dans au moins une zone $Z_j$ spatialement distincte de la zone $Z_i$ préalablement identifiée, de manière à augmenter la valeur d'un paramètre représentatif du débit d'un fluide caloporteur dans la zone $Z_i$.

De préférence, le circuit de refroidissement comportant une pluralité de conduits dans lesquels le fluide caloporteur est destiné à s'écouler, l'étape v) comporte :

- une sous-étape dans laquelle on identifie au moins une zone $Z_i$ de la cellule où la seconde grandeur thermique présente une valeur locale estimée supérieure à une valeur seuil prédéterminée, et on identifie le ou lesdits conduits traversant la zone $Z_i$ identifiée ;
- une sous-étape dans laquelle on détermine la distribution spatiale du paramètre d'intérêt par modification de sa valeur initiale dans au moins un conduit ne traversant pas la zone $Z_i$ préalablement identifiée, de manière à augmenter la valeur d'un paramètre représentatif du débit d'un fluide caloporteur dans le ou lesdits conduits traversant ladite zone $Z_i$.

De préférence, la première grandeur thermique est représentative d'une production d'énergie thermique au sein de la cellule en fonctionnement, et la seconde grandeur thermique est représentative d'un débit d'un fluide caloporteur dans un circuit de refroidissement d'une plaque bipolaire de la cellule.

De préférence, lors de l'étape iv), on estime la distribution spatiale du débit du fluide caloporteur permettant d'évacuer ladite chaleur produite selon la distribution spatiale de manière à obtenir ladite distribution spatiale de la température de consigne.

De préférence, lors de l'étape v), on détermine la distribution spatiale du paramètre d'intérêt de manière à ce que le débit du fluide caloporteur dans le circuit de refroidissement présente la distribution spatiale préalablement estimée.

L'invention porte également sur un procédé de réalisation d'une plaque bipolaire de cellule électrochimique, comportant les étapes dans lesquelles :

- on considère une cellule électrochimique de référence comportant deux électrodes séparées l'une de l'autre par un électrolyte et disposées entre des plaques bipolaires adaptées à amener des espèces réactives aux électrodes et à évacuer de la chaleur produite par la cellule en fonctionnement par un circuit de refroidissement dans lequel est destiné à circuler un fluide caloporteur, le circuit de refroidissement présentant un paramètre d'intérêt, représentatif une résistance hydraulique ou un coefficient géométrique de pertes de charge singulières, réparti spatialement selon une distribution initiale ;

- on détermine, par le procédé de détermination selon l'une quelconque des caractéristiques précédentes, une distribution spatiale du paramètre d'intérêt ;
- on réalise ladite plaque bipolaire de sorte que le paramètre d'intérêt présente la distribution spatiale déterminée.

De préférence, on ajoute un insert dans au moins un conduit du circuit de refroidissement, ledit insert présentant une épaisseur transversale à un axe longitudinal dudit conduit adapté à augmenter localement la résistance hydraulique du conduit.

De préférence, on ajoute un insert dans au moins un conduit du circuit de refroidissement, ledit insert étant formé d'au moins une portion de plaque d'épaisseur sensiblement constante, comportant au moins un bossage adapté à former localement une perte de charge singulière.

L'invention porte également sur un procédé de réalisation d'une cellule électrochimique comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, le procédé comportant les étapes suivantes :

- on considère une cellule électrochimique de référence présentant un paramètre d'intérêt représentatif d'une évacuation de chaleur au sein d'une plaque bipolaire d'une cellule électrochimique, réparti selon une distribution spatiale initiale ;
- on détermine, par le procédé de détermination selon l'une quelconque des caractéristiques précédentes, une distribution spatiale du paramètre d'intérêt ;
- on réalise la cellule électrochimique sur la base de la cellule électrochimique de référence dans laquelle le paramètre d'intérêt présente la distribution spatiale déterminée.

Par sur la base de, on entend que la cellule électrochimique réalisée présente les mêmes propriétés électrochimiques que celles de la cellule de référence, hormis le paramètre d'intérêt qui est réparti selon la distribution spatiale déterminée. La cellule électrochimique réalisée peut être la cellule de référence dans laquelle la distribution spatiale initiale du paramètre d'intérêt a été modifiée pour être sensiblement égale à la distribution spatiale déterminée.

L'invention porte également sur un support d'enregistrement, comportant des instructions pour la mise en oeuvre du procédé de détermination selon l'une quelconque des caractéristiques précédentes, ces instructions étant aptes à être exécutées par un processeur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1a est une représentation schématique en coupe d'un exemple de cellule électrochimique, et la figure 1b est une représentation schématique illustrant la relation de corrélation entre la distribution spatiale de la production de chaleur Q et la distribution spatiale d'évacuation de chaleur P de laquelle résulte la distribution spatiale de température effective T de la cellule électrochimique en fonctionnement ;

la figure 2 est un organigramme d'un procédé de détermination de la distribution spatiale de la résistance hydraulique d'un circuit de refroidissement d'une plaque bipolaire d'une cellule électrochimique selon un premier mode de réalisation ;

la figure 3 est un organigramme d'un procédé de détermination de la distribution spatiale de la résistance hydraulique d'un circuit de refroidissement d'une cellule électrochimique selon un deuxième mode de réalisation ;

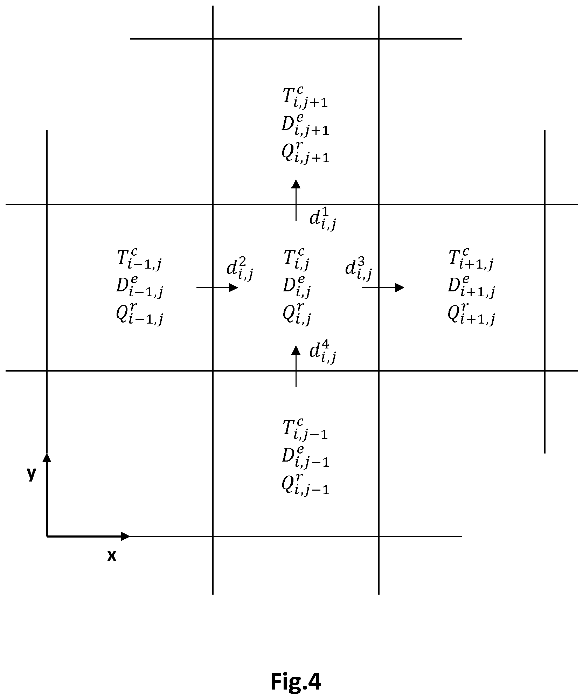

la figure 4 est un exemple de maillage du circuit de refroidissement où chaque maille comporte un terme de production locale de chaleur $Q_{i,j}^{r}$, un terme d'évacuation locale de chaleur $D_{i,j}^{e}$, et une température locale de consigne $T_{i,j}^{c}$ ;

la figure 5a illustre de manière partielle et en coupe transversale une plaque bipolaire de référence comportant un circuit de refroidissement, la figure 5b est une vue similaire à celle de la figure 5a dans laquelle la plaque bipolaire comporte des inserts permettant d'augmenter la résistance hydraulique locale, et la figure 5c est une vue en coupe longitudinale d'un insert selon une variante permettant de générer des pertes de charge singulière ; et

la figure 6 illustre un exemple de débit dans des conduits d'un circuit de refroidissement d'une plaque bipolaire de référence (trait pointillé) ou d'une plaque bipolaire muni d'inserts (trait plein).

## EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

On décrira différents modes de réalisation et variante en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 250°C, ainsi qu'aux électrolyseurs électrochimiques.

La figure la illustre de manière partielle et schématique un exemple de cellule électrochimique 1 appartenant à un empilement de cellules d'une pile à combustible de type PEM. La cellule 1 comporte une anode 10 et une cathode 20 séparées l'une de l'autre par un électrolyte comprenant ici une membrane polymère 30, les électrodes 10, 20 étant disposées entre deux plaques bipolaires 40, 50 adaptées à amener des espèces réactives aux électrodes et à évacuer la chaleur produite lors de la réaction électrochimique.

Chaque électrode 10, 20 comporte une couche de diffusion 11, 21 (GDL, pour *Gas Diffusion Loyer,* en anglais) disposée au contact de l'une des plaques bipolaires 40, 50 et une couche active 12, 22 située entre la membrane 30 et la couche de diffusion 11, 21. Les couches de diffusion 11, 21 sont réalisées en matériau poreux autorisant la diffusion des espèces réactives à partir du circuit de distribution des plaques bipolaires jusqu'aux couches actives, ainsi que la diffusion des produits issus de la réaction électrochimique jusqu'au même circuit de distribution. Les couches actives 12, 22 sont le lieu des réactions électrochimiques. Elles comportent des matériaux adaptés à permettre les réactions d'oxydation et de réduction aux interfaces respectives de l'anode et la cathode avec la membrane. Plus précisément, elles comportent chacune un ionomère assurant la conductivité protonique, par exemple du Nafion, un catalyseur pour générer la réaction électrochimique, par exemple du platine, et un support électriquement conducteur, par exemple une matrice carbonée.

Les plaques bipolaires comportent un circuit de distribution d'hydrogène 41 situé sur une face anodique et un circuit de distribution d'oxygène 51 situé sur une face cathodique. Elles sont ici formées de deux tôles métalliques 42a, 42b ; 52a, 52b, assemblées l'une à l'autre, et sont embouties de manière à former les circuits de distribution. L'agencement des bossages permet de réaliser également un circuit de refroidissement 43, 53 à l'intérieur des plaques de manière à permettre l'écoulement d'un fluide caloporteur sans que celui-ci ne vienne au contact des électrodes. D'autres technologies de plaque bipolaire peuvent être utilisées, par exemple les plaques réalisées en matériau composite chargé par exemple de graphite, où les bossages sont réalisés par moulage.

Le circuit de refroidissement est donc formé d'un réseau de conduits dont le dimensionnement et l'orientation, et éventuellement l'interconnexion des conduits, dépendent à la fois de ceux des canaux du circuit de distribution du carburant et de ceux des canaux du circuit de distribution du comburant. Les conduits sont sensiblement parallèles entre eux et s'étendent entre une entrée et une sortie du circuit de refroidissement. Ils peuvent être fluidiquement indépendants les uns des autres ou être connectés les uns aux autres, de sorte que le fluide circulant dans le circuit de refroidissement peut ou non rester confiné dans chacun des conduits.

Chaque conduit présente des propriétés géométriques locales qui peuvent induire une perte de charge singulière ou une modification de la résistance hydraulique, ce qui peut modifier le débit du fluide caloporteur dans le conduit. A titre d'exemple, ces propriétés géométriques locales peuvent être une variation de la section de passage du fluide, voire un changement d'orientation du conduit (par exemple un coude). On peut ainsi définir :

- un coefficient géométrique local $\zeta_{xy}$ de perte de charge singulière, tel que $\Delta Ps \approx \zeta_{xy}.v^2/2g$, où $\Delta Ps$ est la perte de charge singulière, v la vitesse incidente du fluide et g la constante de gravité. La valeur du coefficient géométrique $\zeta_{xy}$ dépend de la nature de la modification locale de l'écoulement du fluide.
- une résistance hydraulique locale $Rh_{xy}$ d'un conduit, qui correspond au rapport entre la différence de pression entre l'entrée et la sortie du conduit sur le débit volumique du fluide caloporteur. Elle est liée au diamètre hydraulique local selon la relation : $Rh_{xy} \propto 1/dh_{xy}^4$, le diamètre hydraulique local $dh_{xy}$ étant défini comme le rapport entre l'aire de la section de passage du fluide caloporteur sur le périmètre de la section de passage.

Ainsi, une modification locale de l'orientation du conduit et une variation du diamètre hydraulique peuvent entraîner la formation d'une perte de charge singulière et/ou une variation de la résistance hydraulique, ce qui se traduit par une modification du débit du fluide caloporteur dans le conduit de refroidissement. Le débit volumique de fluide caloporteur n'est donc pas homogène au sein du circuit de refroidissement, ce qui se traduit par des inhomogénéités dans la distribution spatiale de la puissance calorifique évacuée localement par le fluide caloporteur.

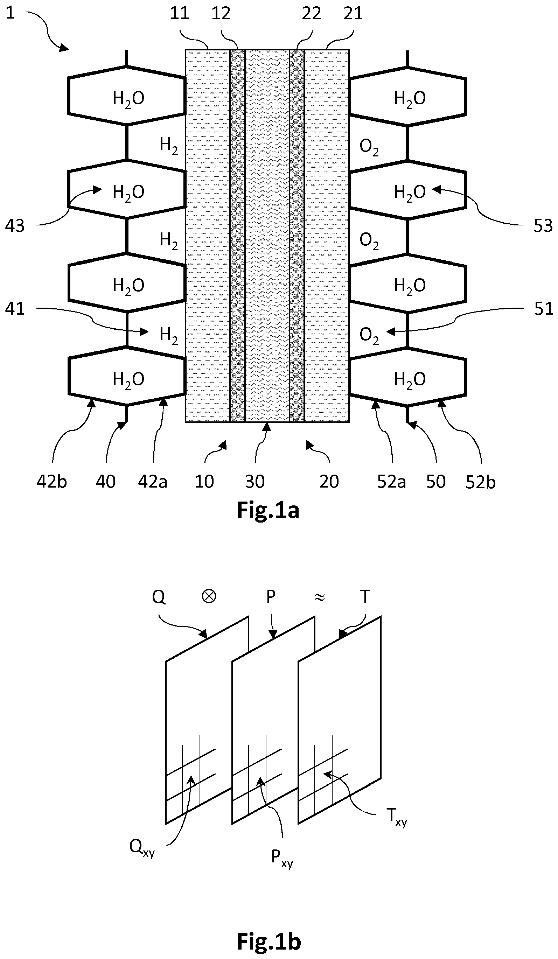

La figure 1b représente schématiquement la distribution spatiale de température $T_{xy}$ de la cellule électrochimique comme résultant d'une relation de corrélation entre :

- la distribution spatiale d'une grandeur représentative de la production de chaleur par la cellule, par exemple le flux de chaleur produite localement $Q_{xy}$, et
- la distribution spatiale d'une grandeur représentative de l'évacuation de la chaleur produite, par exemple la puissance calorifique $P_{xy}$ reçue localement et évacuée par le fluide caloporteur dans le circuit de refroidissement.

Aussi, contrairement à l'enseignement de la demande FR2976732 cité précédemment, homogénéiser la distribution de production de chaleur $Q_{xy}$ et donc celle de l'échauffement de la cellule ne peut suffire à obtenir l'homogénéisation de la distribution de température $T_{xy}$ de la cellule. En effet, il importe de tenir compte à la fois de la présence d'éventuelles inhomogénéités locales dans le terme $Q_{xy}$ de production de chaleur ainsi que de la présence d'éventuelles inhomogénéités locales dans le terme $P_{xy}$ d'évacuation de chaleur.

En effet, la production locale de chaleur, ou plus précisément le flux local de chaleur produite $Q_{x,y}$, est directement proportionnelle à la production locale d'énergie électrique, et plus précisément à la densité locale de courant $I_{x,y}$, comme l'exprime la relation entre les distributions spatiales respectives :

$$Q_{x,y} = I_{x,y} \left( \Delta H / 2F - U_{x,y} \right) \qquad (1)$$

où $\Delta H$ est l'enthalpie de la réaction électrochimique, F la constante de Faraday, et $U_{x,y}$ la distribution spatiale de la tension locale de la cellule, l'enthalpie et la tension pouvant être considérées comme quasiment homogènes en tout point de la cellule. Ainsi, la production de chaleur est impactée par toute inhomogénéité qui provient des paramètres fluidiques (dimensionnement des circuits de distribution des espèces réactives...), électrochimiques (propriétés locales des électrodes et de la membrane...), mais également électriques (résistances électriques des différents éléments de la cellule, par exemple résistivités des matériaux et résistances de contact entre les éléments de la cellule...), qui tous influent sur la distribution de densité de courant.

Par ailleurs, comme mentionné précédemment, la puissance calorifique $P_{xy}$ reçue et évacuée localement par le fluide caloporteur peut également présenter des inhomogénéités locales qui proviennent des inhomogénéités de débit dans le circuit de refroidissement, comme l'exprime la relation :

$$P_{x,y} = D_{x,y} . c_p . \delta T_{x,y} \qquad (2)$$

où $D_{x,y}$ est le débit volumique local du fluide caloporteur dans le circuit de refroidissement, $c_p$ est la capacité calorifique volumique du fluide caloporteur, et $\delta T_{x,y}$ est une variation locale de température du fluide caloporteur au sein du circuit de refroidissement.

Dans le cadre de l'invention, on cherche à déterminer la distribution spatiale d'un paramètre d'intérêt représentatif de l'évacuation locale d'énergie thermique pour que la distribution spatiale de la température effective de la cellule en fonctionnement corresponde à celle d'une température de consigne, tout en tenant compte de la distribution spatiale d'un paramètre représentatif de la production effective d'énergie thermique au sein de la cellule électrochimique.

Par paramètre d'intérêt représentatif de l'évacuation locale de chaleur, on entend un paramètre dont la valeur traduit la capacité de la cellule, et plus précisément du circuit de refroidissement d'au moins une plaque bipolaire de la cellule, à évacuer localement la chaleur produite. Il peut ainsi s'agir de la puissance calorifique $P_{x,y}$ reçue localement par le fluide caloporteur dans le circuit de refroidissement, du débit local $D_{x,y}$ du fluide caloporteur, et, de préférence, de la résistance hydraulique locale $Rh_{x,y}$ du circuit de refroidissement ou d'un paramètre équivalent (tel que le diamètre hydraulique local), ou encore du coefficient géométrique local $\zeta_{xy}$ de perte de charge singulière.

Par paramètre représentatif de la production d'énergie thermique, on entend un paramètre dont la valeur influe localement sur le flux de chaleur produite $Q_{x,y}$. Il s'agit ici en particulier de tout paramètre qui influe sur la densité locale de courant $I_{x,y}$. Il peut s'agir de la résistance électrique $Re_{x,y}$ de la cellule qui dépend notamment de la résistivité des différents éléments de la cellule (plaques bipolaires, couches de diffusion, couches actives, membrane) et de la résistance électrique de contact entre chacun de ces éléments. Il peut également s'agir de la charge $C_{x,y}$ (ou taux de charge, ou masse surfacique) en catalyseur de la couche active dans la mesure où elle influe directement sur la densité locale de courant $I_{x,y}$, ou encore de la perméabilité $k_{x,y}$ de la couche de diffusion des électrodes qui détermine la quantité d'espèce réactive susceptible de diffuser localement jusqu'à la couche active.

Par température de la cellule, on entend la température locale, c'est-à-dire la distribution spatiale de température de l'un ou l'autre des éléments de la cellule, par exemple de l'une des plaques bipolaires voire de l'une des électrodes. La température de la cellule peut ainsi correspondre à la distribution spatiale de température du circuit de refroidissement. La température effective de la cellule est la distribution spatiale de température de la cellule en fonctionnement, au point de polarisation définie par la tension de la cellule $U_{tot}$ et la densité totale de courant $I_{tot}$, c'est-à-dire la densité locale de courant $I_{x,y}$ intégrée sur toute la surface de la cellule.

Enfin, par distribution spatiale d'un paramètre, on entend la valeur locale de ce paramètre en tout point de la cellule, ou plus précisément, en tout point (x,y) d'un plan parallèle à la cellule, au niveau de la zone dite active correspondant à l'étendue surfacique des couches actives des électrodes.

Ainsi, la cellule électrochimique dont le paramètre d'intérêt représentatif de l'évacuation locale de chaleur est réparti spatialement selon la distribution ainsi déterminée présente une température effective, ou température lors du fonctionnement de la cellule, sensiblement identique à la température de consigne. Cette température de consigne présente avantageusement une distribution spatiale sensiblement homogène, en scalaire ou en gradient. Par homogène en scalaire, on entend que la valeur locale de la température est sensiblement constant. Par homogène en gradient, on entend que le gradient local de température est sensiblement constant. Les valeurs locales de température peuvent cependant être non constantes tout en restant inférieures à des valeurs locales maximales prédéterminées. Ainsi, la cellule ne présente avantageusement pas de zones de sur-température, également appelées points chauds, qui d'une part peuvent augmenter la cinétique des réactions de dégradation des éléments de la cellule et d'autre part peuvent générer des contraintes mécaniques susceptibles de dégrader la tenue mécanique des éléments de la cellule. La durée de vie de la cellule électrochimique est alors préservée. Par point chaud, on entend par exemple une zone de la cellule qui présente un pic de température ou un pic de gradient de température. Plus précisément, un point chaud peut être une zone où l'écart entre la température locale et la température d'entrée du circuit de refroidissement est supérieur au produit d'un coefficient et de l'écart de température entre l'entrée et la sortie du circuit de refroidissement, le coefficient pouvant être de l'ordre de 1,1 à 3 voire davantage, et est de préférence de l'ordre de 1,5. A titre d'exemple, pour une température de 77°C à l'entrée du circuit de refroidissement et de 80°C à la sortie du circuit, et pour un coefficient égal à 1,5, un point chaud est une zone de la cellule où la température locale excède 81,5°C.

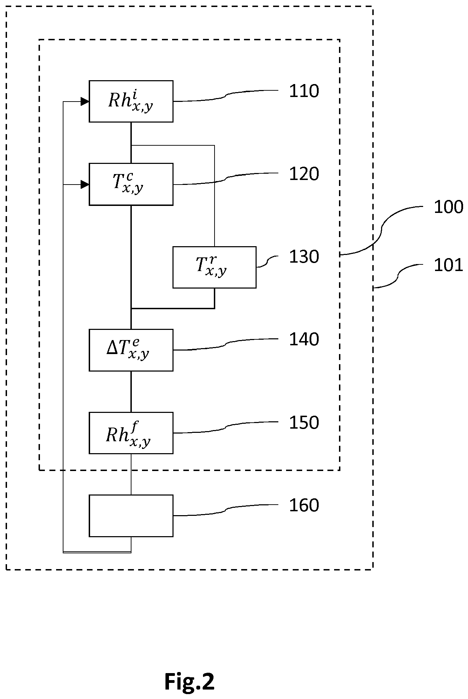

La figure 2 est un organigramme d'un procédé de détermination de la distribution spatiale du paramètre d'intérêt représentatif de l'évacuation locale de chaleur, selon un premier mode de réalisation. Dans cet exemple, le paramètre d'intérêt est la résistance hydraulique locale $Rh_{xy}$ du circuit de refroidissement d'au moins l'une des plaques bipolaires de la cellule électrochimique, dont la valeur influe directement sur le débit local du fluide caloporteur dans les conduits de refroidissement et donc sur la puissance calorifique locale reçue puis évacuée par le fluide caloporteur. De manière alternative et éventuellement complémentaire, le paramètre d'intérêt peut être le coefficient géométrique local $\zeta_{xy}$ de perte de charge singulière.

La valeur de la résistance hydraulique locale $Rh_{xy}$ modifie le débit local $D_{xy}$ dans le cas où les conduits sont interconnectés, ou le débit moyen $\overline{D}_k$ le long du conduit k considéré dans le cas où les conduits ne sont pas interconnectés. Dans les deux situations, une modification locale du débit dans une zone déterminée du circuit de refroidissement induit, par le principe de conservation de la masse (exprimée par l'équation de continuité en mécanique des fluides), une variation du débit dans les autres zones du circuit.

Selon ce premier mode de réalisation 100, on détermine une distribution spatiale optimisée $Rh_{x,y}^{f}$ de la résistance hydraulique Rh à partir de l'estimation de la distribution spatiale $\Delta T_{x,y}^{e}$ d'une grandeur thermique $\Delta T^e$ de comparaison entre une température effective $T^r$ de la cellule en fonctionnement dans laquelle la résistance hydraulique est répartie selon une distribution initiale $Rh_{x,y}^{i}$ donnée, et une température de consigne $T^c$ prédéterminée. On est alors en mesure de réaliser une plaque bipolaire dont la résistance hydraulique du circuit de refroidissement présente la distribution optimisée $Rh_{x,y}^{f}$, de manière à ce que la température effective $T^r$ de la cellule ainsi modifiée soit sensiblement égale à la température de consigne $T^c$.

Lors d'une première étape 110, on définit une cellule électrochimique de référence dont l'une des plaques bipolaires comporte un circuit de refroidissement au sein duquel la résistance hydraulique Rh est répartie spatialement

8

selon une distribution initiale $Rh^i_{x,y}$. La cellule présente une structure identique ou similaire à celle décrite en référence à la figure 1. La distribution initiale $Rh^i_{x,y}$ de la résistance hydraulique peut présenter des inhomogénéités locales et ainsi induire des variations de débit du fluide caloporteur.

Lors d'une étape 120, on définit une distribution spatiale $T^c_{x,y}$ d'une température de consigne $T^c$ de la cellule de référence lorsque celle-ci est en fonctionnement et produit une densité totale de courant $I_{tot}$ pour une tension $U_{tot}$ donnée. Au premier ordre, la température de consigne $T^c$ de la cellule peut correspondre à une température du fluide caloporteur au sein du circuit de refroidissement, la distribution de cette température dépendant alors notamment des valeurs en entrée $T^c_e$ et en sortie $T^c_s$ du fluide caloporteur dans le circuit de refroidissement. A titre illustratif, la température d'entrée peut être fixée préalablement, par exemple à 75°C, et la température de sortie peut être estimée à partir de la puissance thermique $P_{th}$ à évacuer, celle-ci correspondant à la puissance électrique $P_e = I_{tot}.U_{tot}$ délivrée par la cellule en fonctionnement. La puissance thermique $P_{th}$ est estimée à partir du flux local de chaleur produite $Q_{x,y}$ intégrée sur toute la surface de la zone active obtenu à partir de la relation (1). L'estimation de la température de sortie $T^c_s$ peut ensuite être obtenue à partir de la relation (2) étendue à l'ensemble de la zone active :

$$P_{th} = \iint Q_{x,y}\,dx\,dy = \overline{D}_{tot}.\,c_p.\,(T^c_s - T^c_e) \qquad (3)$$

où $\overline{D}_{tot}$ est le débit moyen total du fluide caloporteur circulant dans le circuit de refroidissement. On peut ensuite définir la distribution spatiale $T^c_{x,y}$ de la température de consigne $T^c$ à partir des valeurs de température du fluide caloporteur en entrée $T^c_e$ et en sortie $T^c_s$ du circuit de refroidissement, la distribution $T^c_{x,y}$ étant avantageusement homogène en gradient, c'est-à-dire que le gradient local de température de consigne est sensiblement constant.

Lors d'une étape 130, on obtient une distribution spatiale $T^r_{x,y}$ d'une première grandeur thermique représentative de la température de la cellule en fonctionnement. La première grandeur thermique est ici la température effective $T^r$ de la cellule électrochimique lorsqu'elle fonctionne dans les mêmes conditions opératoires que celles considérées à l'étape 120. Cette distribution $T^r_{x,y}$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 110, par exemple au moyen d'une carte S++ commercialisée par la société « S++ Simulation Services » comportant une plaque invasive insérée entre deux plaques bipolaires et adaptée à mesurer une distribution spatiale de température. La distribution $T^r_{x,y}$ de température effective peut également être obtenue par simulation numérique à partir d'un modèle électrochimique de cellule, par exemple celui décrit dans la publication d'Inoue et al., Numerical analysis of relative humidity distribution in polymer electrolyte fuel cell stock including cooling water, J. Power Sources 162 (2006) 81-93.

La distribution $T^r_{x,y}$ de la température effective $T^r$ obtenue par mesure expérimentale ou numérique prend ainsi en compte les inhomogénéités locales du flux effectif de chaleur produite qui dépend de la densité locale de courant, ainsi que les inhomogénéités locales de l'évacuation effective de chaleur qui dépend notamment du débit local du fluide caloporteur dans le circuit de refroidissement.

Lors d'une étape 140, on estime la distribution spatiale d'une seconde grandeurthermique, ici une grandeur de comparaison $\Delta T^e$ représentative d'un écart local entre la température effective $T^r$ et la température de consigne $T^c$. L'estimation de cette grandeur de comparaison local $\Delta T^e$ est calculée à partir de la distribution spatiale $T^c_{x,y}$ de la température de consigne $T^c$ définie lors de l'étape 120 et de la distribution spatiale $T^r_{x,y}$ de la température effective $T^r$ mesurée lors de l'étape 130. Il peut s'agir de la différence entre la valeur locale de la température effective et celle de la température de consigne, ou d'un rapport entre ces valeurs, ou équivalent. On considère ici la différence termes à termes entre les distributions de la température effective et de la température de consigne :

$$\Delta T_{x,y}^{e} = T_{x,y}^{r} - T_{x,y}^{c}.$$

Lors d'une étape 150, on détermine une distribution spatiale $Rh_{x,y}^{f}$ de la résistance hydraulique Rh en fonction de la distribution spatiale $\Delta T_{x,y}^{e}$ de la grandeur de comparaison $\Delta T^{e}$.

Dans un premier temps, on identifie tout d'abord au moins une zone $Z_i$ de la cellule dans laquelle la grandeur de comparaison $\Delta T^{e}$ présente une valeur supérieure ou égale à une valeur seuil prédéterminée, la valeur seuil étant par exemple représentative d'un point chaud.

Dans un second temps, selon une première variante où les conduits de refroidissement sont interconnectés, on détermine la distribution spatiale $Rh_{x,y}^{f}$ de la résistance hydraulique Rh en identifiant au moins une zone $Z_j$, spatialement distinctes de la zone $Z_i$, dans laquelle on attribue une valeur locale de résistance hydraulique supérieure à la valeur locale initiale, de sorte que le débit dans la zone $Z_i$ de point chaud présente une nouvelle valeur locale supérieure à sa valeur initiale, en vertu du principe de conservation de la masse.

Selon une autre variante où les conduits de refroidissement ne sont pas interconnectés, on détermine la distribution spatiale $Rh_{x,y}^{f}$ de la résistance hydraulique Rh en identifiant au moins un conduit $k_j$ ne traversant pas la zone $Z_i$ identifiée, et on lui attribue une valeur de résistance hydraulique supérieure à sa valeur initiale de sorte que le débit dans le ou les conduits $k_i$ traversant la zone $Z_i$ de point chaud présente une nouvelle valeur locale supérieure à sa valeur initiale, en vertu du principe de conservation de la masse.

Ces deux variantes se distinguent l'une de l'autre dans le sens où, dans le cas où les conduits sont interconnectés, le débit dans le circuit de refroidissement s'apparente au débit dans un milieu poreux où les pores sont interconnectés. Une détermination de la localisation spatiale de la modification de la résistance hydraulique est donc nécessaire. Au contraire, dans le cas où les conduits ne sont pas interconnectés, le débit dans chaque conduit dépend essentiellement de la résistance hydraulique de celui-ci, et non pas de la localisation spatiale de la modification de la résistance hydraulique.

Ainsi, la puissance calorifique $P_{Zi}$ évacuée dans la zone $Z_i$ est augmentée, ce qui contribue à diminuer l'écart, dans cette zone, entre la température effective et la température de consigne, et donc à atténuer voire supprimer le point chaud. La détermination de la distribution spatiale $Rh_{x,y}^{f}$ de la résistance hydraulique Rh est effectuée par une étude paramétrique, par exemple au moyen d'une technique de type PIV (*Particle Image Velocimetry,* en anglais), ou par simulation inverse itérative, par exemple au moyen d'un logiciel de simulation d'écoulement tel que FLUENT ou COMSOL. Concrètement, on modifie la valeur locale de la résistance hydraulique au sein du circuit de refroidissement et on mesure le débit local correspondant. On réitère cette opération jusqu'à ce que l'écart $\Delta T_{x,y}^{e}$ soit minimisé. La minimisation de cet écart peut être effectuée à l'aide d'algorithmes classiques d'optimisation, tels que, par exemple, la minimisation par descente de gradient.

De manière avantageuse, on détermine la distribution sans modifier les propriétés d'écoulement dans les circuits de distribution d'espèces réactives. Pour cela, on n'augmente pas le diamètre hydraulique des conduits de refroidissement, mais on augmente la résistance hydraulique (ou le coefficient géométrique local) au sein du circuit de refroidissement, lors de l'étude paramétrique ou de l'étude par simulation numérique.

On obtient ainsi une distribution spatiale $Rh_{x,y}^{f}$ de la résistance hydraulique Rh du circuit de refroidissement de la plaque bipolaire de la cellule électrochimique. On est alors en mesure de modifier la distribution initiale $Rh_{x,y}^{i}$ de la résistance hydraulique Rh du circuit de refroidissement de la plaque bipolaire de la cellule de référence pour qu'elle présente la nouvelle distribution déterminée lors de l'étape 150, ou de réaliser une plaque bipolaire dont le circuit de refroidissement présente la distribution spatiale $Rh_{x,y}^{f}$ de la résistance hydraulique Rh. La cellule comportant une telle plaque bipolaire ainsi optimisée présente alors, en fonctionnement, une température effective $T^{r}$ dont la distribution spatiale est sensiblement égale à celle de la température de consigne $T^{c}$. Dans la mesure où la distribution de la température de consigne est avantageusement homogène spatialement, la cellule en fonctionnement présente une température effective dont la distribution est également sensiblement homogène, permettant ainsi de préserver la durée de vie de la cellule.

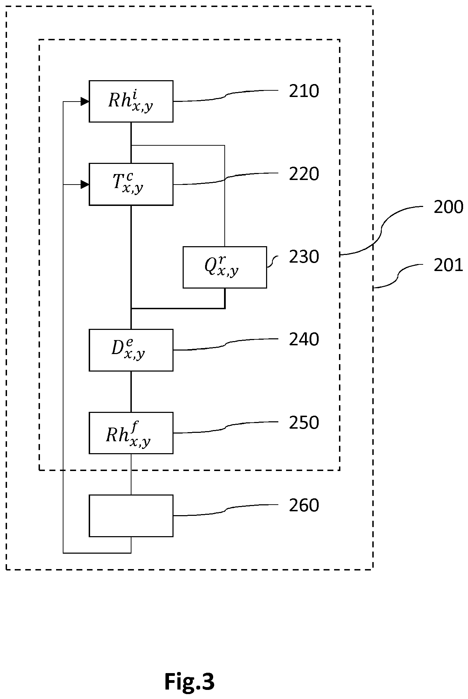

La figure 3 est un organigramme d'un procédé de détermination de la distribution spatiale d'un paramètre d'intérêt représentatif de l'évacuation locale de chaleur, selon un deuxième mode de réalisation. Dans cet exemple, le paramètre d'intérêt est la résistance hydraulique du circuit de refroidissement d'au moins l'une des plaques bipolaires de la cellule électrochimique, dont la valeur $Rh_{x,y}$ influe directement sur le débit local du fluide caloporteur et donc sur la puissance calorifique reçue puis évacuée par le fluide caloporteur. De manière alternative et éventuellement complémentaire, le paramètre d'intérêt peut être le coefficient géométrique local $\zeta_{xy}$ de perte de charge singulière.

Selon ce deuxième mode de réalisation 200, on détermine une distribution spatiale $Rh_{x,y}^f$ de la résistance hydraulique Rh à partir de l'estimation de la distribution spatiale d'une grandeur thermique représentative de l'évacuation de chaleur dans la cellule permettant d'obtenir la distribution spatiale d'une température de consigne, tout en tenant compte de la distribution spatiale d'une grandeur thermique représentative de la production effective de chaleur produite par la cellule. On est alors en mesure de réaliser une plaque bipolaire dont la résistance hydraulique du circuit de refroidissement présente la distribution optimisée $Rh_{x,y}^f{}'$ de manière à ce que la température effective $T^r$ de la cellule ainsi modifiée soit sensiblement égale à la température de consigne $T^c$. La cellule électrochimique, dont le paramètre d'intérêt est spatialement réparti selon la distribution optimisée, présente en fonctionnement une température sensiblement égale à la température de consigne. Il n'y a pas de formations de nouveaux points chauds ou nouvelles inhomogénéités de température non voulus.

Cette approche, dite électrochimique, et non plus essentiellement thermique, est particulièrement avantageuse lorsqu'au moins une plaque bipolaire de la cellule électrochimique, voire les deux plaques bipolaires, sont formées de tôles accolées l'une à l'autre et présentant des bossages qui définissent un circuit de refroidissement bidimensionnel. Les bossages de chaque tôle, au niveau des faces, dites externes, des tôles, c'est-à-dire des faces orientées vers une électrode, définissent un circuit de distribution pour les espèces réactives. Au niveau des faces internes, c'est-à-dire des faces opposées aux faces externes, les bossages forment un circuit de refroidissement dans lequel est destiné à circuler un fluide caloporteur. Le circuit de refroidissement est dit linéaire lorsque les canaux de refroidissement ne communiquent pas entre eux, c'est-à-dire que le fluide caloporteur, entre l'entrée et la sortie du circuit de refroidissement, ne peut sensiblement pas passer d'un canal de refroidissement à un autre. Le circuit de refroidissement est dit bidimensionnel lorsque les canaux de refroidissement communiquent entre eux, de manière à former un réseau fluidique bidimensionnel et non pas linéaire. C'est le cas notamment lorsque les canaux de distribution d'une tôle ne sont pas parallèles à ceux de l'autre tôle.

Lors d'une première étape 210, on définit, ou fournit, une cellule électrochimique de référence dont au moins l'une des plaques bipolaires comporte un circuit de refroidissement au sein duquel la résistance hydraulique Rh est répartie spatialement selon une distribution initiale $Rh_{x,y}^i$. La cellule présente une structure identique ou similaire à celle décrite en référence à la figure 1. La distribution initiale $Rh_{x,y}^i$ de la résistance hydraulique peut présenter des inhomogénéités locales et ainsi induire des variations de débit du fluide caloporteur. Cette étape est similaire ou identique à l'étape 110 décrite précédemment. La cellule électrochimique considérée présente alors, en fonctionnement, une distribution spatiale de température dont au moins une valeur locale est supérieure ou égale à une valeur locale maximale prédéterminée. Cette dernière peut être constante ou différente en fonction du point considéré de la cellule électrochimique. Cette étape peut comporter :

- une phase de réalisation expérimentale ou de modélisation numérique d'une cellule électrochimique,
- une phase de mesure de la distribution spatiale de la température au sein de la cellule électrochimique en fonctionnement, puis
- une phase de comparaison de la distribution spatiale mesurée de la température vis-à-vis d'une distribution spatiale prédéterminée d'une température maximale. Les valeurs locales de cette distribution spatiale de température maximale sont dites valeurs locales maximales prédéterminées.

Lorsqu'au moins une valeur locale de la température mesurée est supérieure ou égale à une valeur locale maximale prédéterminée correspondante, c'est-à-dire pour la même position au sein de la distribution spatiale, la cellule électrochimique est alors fournie, c'est-à-dire considérée, pour les étapes suivantes du procédé de détermination.

Lors d'une étape 220, on définit une distribution spatiale $T_{x,y}^c$ d'une température de consigne $T^c$ de la cellule de référence lorsque celle-ci est en fonctionnement et produit une densité totale de courant $I_{tot}$ pour une tension $U_{tot}$ donnée. Cette étape est similaire ou identique à l'étape 120 décrite précédemment. Les valeurs locales de la distribution spatiale de la température de consigne sont inférieures à des valeurs locales maximales correspondantes.

De manière facultative, il est avantageux de préciser la distribution spatiale $T_{x,y}^{c}$ de la température de consigne $T^c$ en fonction de la distribution spatiale de la concentration en espèce réactive au niveau de la zone active entre l'entrée et la sortie du circuit de distribution correspondant. En effet, la consommation d'espèce réactive au sein de la zone active de la cellule conduit à une diminution progressive de la concentration d'espèce réactive le long du circuit de distribution. Cette diminution progressive se traduit par une diminution de la densité locale de courant produit par la cellule et donc de la production locale de chaleur, ce qui peut conduire à la formation d'inhomogénéités de la température de la cellule. Pour compenser cette diminution progressive de la production de chaleur, il est avantageux de définir une température de consigne qui tienne compte de la diminution de la concentration d'espèce réactive, de sorte que la température effective de la cellule en fonctionnement correspond à la température de consigne, celle-ci présentant avantageusement une distribution spatiale homogène. Pour cela, la distribution spatiale $\widetilde{T}_{x,y}^{c}$ de la température de consigne précisée $\widetilde{T}^c$ peut s'écrire, par exemple :

$$\widetilde{T}_{x,y}^{c} = T_{x,y}^{c} + K^{i}.[\ max(c_{x,y}^{i}) - c_{x,y}^{i}\ ] \qquad (4)$$

où $c_{x,y}^{i}$ est la distribution spatiale de la concentration $c^i$ en espèce réactive i, par exemple en oxygène, et $K^i$ est une constante positive, par exemple proche de 1, qui peut ultérieurement être ajustée. La distribution spatiale $c_{x,y}^{i}$ de la concentration $c^i$ peut être estimée au premier ordre à partir du cheminement des canaux du circuit de distribution de l'espèce réactive considérée et en supposant une consommation homogène de l'espèce réactive i sur toute la zone active. Elle peut également être déterminée plus précisément par mesure expérimentale ou numérique de la distribution spatiale de la densité de courant dans une cellule similaire ou identique à la cellule de référence, qui permet de déduire celle de la concentration de l'espèce réactive. D'autres relations (4) peuvent convenir pour préciser la distribution spatiale de la température de consigne en tenant compte de l'évolution spatiale de la concentration en espèce réactive. On obtient ainsi une distribution spatiale $\widetilde{T}_{x,y}^{c}$ de la température de consigne $\widetilde{T}^c$ qui permet ainsi d'obtenir une distribution de la température effective de la cellule dont l'homogénéité est améliorée.

Par ailleurs, de manière facultative et éventuellement complémentaire à l'étape de précision de la température de consigne décrite précédemment, il est avantageux de préciser la distribution spatiale $T_{x,y}^{c}$ de la température de consigne $T^c$ en fonction de la distribution spatiale $\varphi_{x,y}$ de l'humidité relative $\varphi$ dans les circuits de distribution. L'humidité relative $\varphi$ est définie classiquement comme le rapport entre la pression partielle $P_{H2O}$ de la vapeur d'eau contenue localement dans le gaz circulant dans le circuit de distribution sur la pression de vapeur saturante $P_{sat}$. L'humidité relative $\varphi$ a un effet sur la cinétique des réactions électrochimiques. Aussi, pour compenser la variation locale de l'humidité relative, il est avantageux de définir une température de consigne qui compense cette variation locale, par exemple l'engorgement ou l'assèchement local des circuits de distribution, de sorte que la température effective de la cellule en fonctionnement présente une distribution spatiale homogène. Pour cela, la distribution spatiale $\widetilde{T}_{x,y}^{\prime c}$ de la température de consigne précisée $\widetilde{T}^{\prime c}$ peut s'écrire, par exemple :

$$\widetilde{T}_{x,y}^{\prime c} = T_{x,y}^{c} + K^{\varphi}.[\ \varphi_{x,y}\ /\ \varphi_{in}\ ] \qquad (5)$$

où $\varphi_{x,y}$ est la distribution spatiale de l'humidité relative $\varphi$ dans le circuit de distribution, $\varphi_{in}$ est l'humidité relative en entrée du circuit de distribution, et $K^{\varphi}$ est une constante positive, par exemple proche de 1, qui peut ultérieurement être ajustée. La distribution $\varphi_{x,y}$ de l'humidité relative $\varphi$ peut être estimée au premier ordre à partir du cheminement des canaux du circuit de distribution considéré et en supposant une densité de courant homogène sur toute la zone active. Elle peut également être déterminée plus précisément par mesure expérimentale ou numérique de la distribution spatiale de la densité de courant dans une cellule similaire ou identique à la cellule de référence, qui permet de déduire celle de l'humidité relative. D'autres relations (5) peuvent convenir pour préciser la distribution spatiale de la température de consigne à partir de l'évolution spatiale de l'humidité relative On obtient ainsi une distribution spatiale $\widetilde{T}_{x,y}^{c}$ de la température de consigne $\widetilde{T}^c$ qui permet ainsi d'obtenir une distribution de la température effective de la cellule dont l'homogénéité est améliorée.

Lors d'une étape 230, on obtient une distribution spatiale $Q_{x,y}^{r}$ d'une première grandeur thermique représentative de la production locale effective d'énergie thermique $Q^r$ par la cellule en fonctionnement. La première grandeur thermique est ici le flux local effectif de chaleur produite par la cellule en fonctionnement, ou une grandeur qui lui est proportionnelle, telle que la densité effective de courant $I^r$ produit par la cellule (cf relation 1). Cette distribution $Q_{x,y}^{r}$ du flux effectif de chaleur produite $Q^r$ n'est pas estimée mais est issue d'une mesure par des moyens expérimentaux ou numériques. Elle peut ainsi être obtenue par mesure expérimentale au sein d'une cellule électrochimique présentant les mêmes propriétés que la cellule de référence définie lors de l'étape 210, par exemple au moyen d'une carte S++ telle que mentionnée précédemment qui mesure par exemple la distribution spatiale de la densité de courant $I^r$ ou de toute autre technique adaptée. La distribution $Q_{x,y}^{r}$ du flux effectif de chaleur produite $Q^r$ peut alternativement être obtenue par simulation numérique à partir d'un modèle électrochimique de cellule présentant les mêmes caractéristiques structurelles et fonctionnelles que celles de la cellule de référence, par exemple le modèle décrit dans la publication de Fink & Fouquet 2011 mentionnée précédemment.

Lors d'une étape 240, on estime la distribution spatiale $D_{x,y}^{e}$ d'une seconde grandeur thermique $D^e$, à partir de ladite distribution spatiale $T_{x,y}^{c}$ de la température de consigne $T^c$ définie lors de l'étape 220, et de ladite distribution spatiale $Q_{x,y}^{r}$ du flux effectif de chaleur produite obtenue lors de l'étape 230. La seconde grandeur thermique est représentative de l'évacuation locale de chaleur et correspond ici au débit du fluide caloporteur dans le circuit de refroidissement permettant d'obtenir une puissance calorifique $P_{x,y}$ d'évacuation du flux effectif de chaleur produite $Q^r$. La température effective de la cellule est alors sensiblement égale à la température de consigne $T^c$.

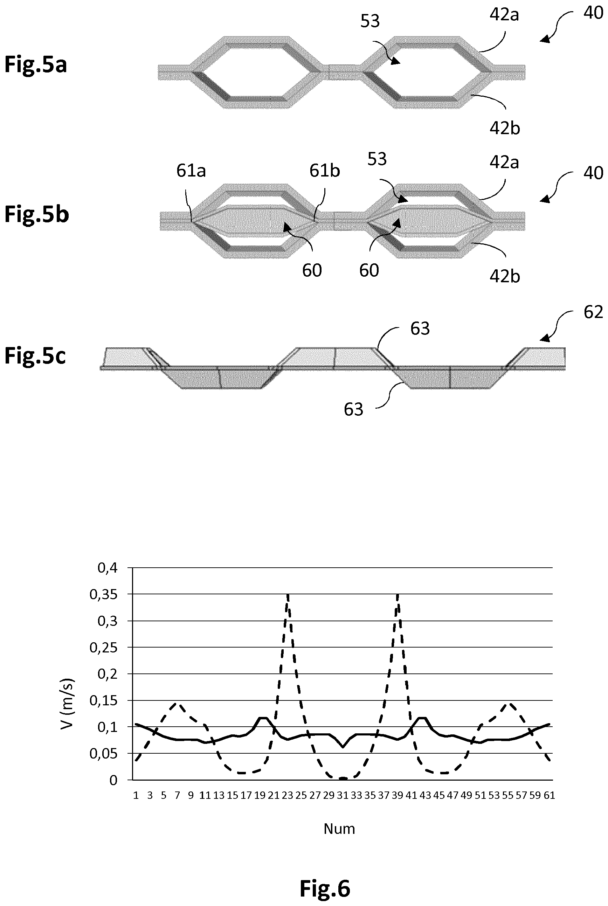

Pour cela, comme l'illustre la figure 5, on discrétise un modèle du circuit de refroidissement en un maillage bidimensionnel ou tridimensionnel, ici bidimensionnel, dont chaque maille est un volume élémentaire (i,j) traversé par le fluide caloporteur. Ainsi, chaque maille (i,j) du circuit de distribution présente deux grandeurs connues :

- la température locale $T_{i,j}^{c}$ de consigne (définie à l'étape 220), et

- le flux local effectif de chaleur produite $Q_{i,j}^{r}$ (mesuré à l'étape 230),

et une grandeur inconnue :

- le débit local $D_{i,j}^{e}$ de fluide caloporteur (à estimer lors de l'étape 240).

On calcule ensuite les transferts thermiques et fluidiques entre la maille considérée et les mailles adjacentes en déterminant d'une part les différences de température, et d'autre part les débits du fluide caloporteur au niveau des quatre facettes de la maille considérée. Ce calcul peut être effectué par simulation numérique par ordinateur, sur ledit maillage. Cela revient à résoudre un modèle numérique discret reliant la seconde grandeur thermique, à savoir ici le débit local du fluide caloporteur, à la température locale et à la première grandeur thermique, à savoir ici le flux local de chaleur. Le modèle numérique, dit électrochimique, peut être exprimé par la relation (8) qui exprime le flux local de chaleur en fonction de la température locale et du débit local du fluide caloporteur.

Les différences de température au niveau des quatre facettes de la maille (i,j) peuvent être définies de la manière suivante :

$$\delta T_{i,j}^{1} = T_{i,j}^{c} - T_{i,j+1}^{c} \qquad (6\text{-}1)$$

$$\delta T_{i,j}^{2} = T_{i,j}^{c} - T_{i-1,j}^{c} \qquad (6\text{-}2)$$

$$\delta T_{i,j}^{3} = T_{i,j}^{c} - T_{i+1,j}^{c} \qquad (6\text{-}3)$$

$$\delta T_{i,j}^{4} = T_{i,j}^{c} - T_{i,j-1}^{c} \qquad (6\text{-}4)$$

Les débits du fluide caloporteur au niveau des quatre facettes de la maille (i,j) peuvent être définis par projection du débit à estimer $D_{i,j}^{e}$ (ici une donnée vectorielle) sur les vecteurs $e_x$ et $e_y$ passant respectivement par les mailles (i-1,j), (i,j) et (i+1,j), et par les mailles (i,j-1), (i,j) et (i,j+1) :

$$d_{i,j}^{1} = (D_{i,j}^{e}.e_y + D_{i,j+1}^{e}.e_y)/2 \qquad (7\text{-}1)$$

$$d_{i,j}^{2} = (D_{i,j}^{e}.e_x + D_{i-1,j}^{e}.e_x)/2 \qquad (7\text{-}2)$$

$$d_{i,j}^{3} = (D_{i,j}^{e}.e_x + D_{i+1,j}^{e}.e_x)/2 \qquad (7\text{-}3)$$

$$d_{i,j}^{4} = (D_{i,j}^{e}.e_y + D_{i,j-1}^{e}.e_y)/2 \qquad (7\text{-}4)$$

Par convention, on considère que le débit local $d_{i,j}$ aux facettes de la maille considérée est positif lorsque le fluide entre dans la maille (i,j) et négatif lorsqu'il en sort.

On estime enfin le débit $D_{i,j}^{e}$ du fluide caloporteur à partir de la relation :

$$Q_{x,y}^{r} \approx Q_{i,j}^{r} = \sum_{k=1}^{4} d_{i,j}^{k}.c_p.\delta T_{i,j}^{k} \qquad (8)$$

On obtient ainsi la distribution spatiale $D_{i,j}^{e}$ du débit $D^e$ du fluide caloporteur dans le circuit de refroidissement de la plaque bipolaire et donc celle de la puissance calorifique $P_{x,y}$ évacuée par le fluide calorifique pour que la distribution $T_{x,y}^{r}$ de température effective $T^r$ corresponde à celle $T_{x,y}^{c}$ de la température de consigne $T^c$, tout en tenant compte de la distribution $Q_{i,j}^{r}$ du flux effectif local de chaleur produite $Q^r$ au sein de la cellule.

Lors d'une étape 250, on détermine la distribution spatiale $Rh_{x,y}^{f}$ de la résistance hydraulique Rh du circuit de refroidissement à partir de la distribution spatiale $D_{x,y}^{e}$ du débit $D^e$ de fluide calorifique estimée lors de l'étape 240. Elle peut être obtenue par étude paramétrique du circuit de refroidissement de la plaque bipolaire, par exemple au moyen d'une technique de type PIV (*Particle Image Velocimetry,* en anglais) ou de toute autre technique adaptée. La distribution $D_{x,y}^{e}$ de débit massique $D^e$ peut également être obtenue par simulation numérique inverse itérative, à partir d'un logiciel de simulation d'écoulement tel que, par exemple, FLUENT ou COMSOL. Concrètement, on modifie la valeur locale de la résistance hydraulique au sein du circuit de refroidissement et on mesure le débit local correspondant. On réitère cette opération jusqu'à ce que le débit local mesuré soit sensiblement égal à la distribution estimée $D_{x,y}^{e}.$

De manière avantageuse, on détermine la distribution sans modifier les propriétés d'écoulement dans les circuits de distribution d'espèces réactives. Pour cela, on n'augmente pas le diamètre hydraulique des conduits de refroidissement, mais on augmente la résistance hydraulique (ou le coefficient géométrique local) au sein du circuit de refroidissement, lors de l'étude paramétrique ou de l'étude par simulation numérique.

On a ainsi déterminé la distribution spatiale $Rh_{x,y}^{f}$ de la résistance hydraulique Rh du circuit de refroidissement d'une plaque bipolaire de sorte que la distribution du débit de fluide caloporteur $D^e$ correspondant se traduise par une puissance calorifique locale évacuée $P_{x,y}$ par le fluide caloporteur permettant à la température effective $T^r$ de la cellule d'être sensiblement égale à la température de consigne $T^c$, tout en tenant compte de la distribution du flux effectif de chaleur produite $Q^r$ au sein de la cellule. Dans la mesure où la température de consigne est avantageusement homogène spatialement, la cellule en fonctionnement présente une température effective dont la distribution est également sensiblement homogène, permettant ainsi de préserver la durée de vie de la cellule.

Un procédé de réalisation d'une plaque bipolaire de la cellule électrochimique est maintenant décrit. On considère une cellule électrochimique identique ou similaire à la cellule de référence définie lors des étapes 110 et 210. Elle comporte ainsi deux électrodes séparées l'une de l'autre par un électrolyte et disposées entre deux plaques bipolaires. Chaque plaque bipolaire comporte des circuits de distribution adaptés à amener des espèces réactives aux électrodes et un circuit de refroidissement dans lequel un fluide caloporteur peut circuler pour évacuer la chaleur produite par la cellule en fonctionnement. Le circuit de refroidissement présente une résistance hydraulique Rh répartie spatialement selon une distribution initiale $Rh^i_{x,y}$. On détermine, par le procédé décrit précédemment en référence aux figures 2 ou 3, une distribution spatiale $Rh^f_{x,y}$ de la résistance hydraulique Rh du circuit de refroidissement de la plaque bipolaire. On réalise ensuite, lors d'une étape 160 (figure 2) ou 260 (figure 3), la plaque bipolaire de sorte que la résistance hydraulique Rh présente la distribution spatiale $Rh^f_{x,y}$ déterminée.

Comme l'illustrent les figures 5a à 5c, les plaques bipolaires 40 de la cellule électrochimique peuvent être formées de deux parties 42a, 42b, par exemple deux tôles, présentant des bossages obtenus par emboutissage ou moulage, assemblées l'une à l'autre. La figure 5a illustre ainsi une vue partielle en coupe d'une plaque bipolaire 40 où les conduits de refroidissement 53 sont formés par des bossages, et présentent un diamètre hydraulique local $dh_{x,y}$ qui définit une résistance hydraulique locale $Rh_{x,y}$.

La figure 5b illustre une vue similaire à celle de la figure 5a, où la plaque bipolaire 40 comporte au moins une partie des conduits 53 munis d'un ou plusieurs inserts 60 permettant de diminuer localement le diamètre hydraulique et donc la résistance hydraulique. Les inserts 60 sont ici des éléments qui présentent une épaisseur, dans un plan transversal à l'axe longitudinal des conduits, adaptée à réduire la zone de passage du fluide caloporteur. Ils comportent deux bordures longitudinales 61a, 61b par lesquelles ils sont fixés à la jointure des tôles 42a, 42b de la plaque bipolaire 40. Ce type d'insert 60 peut être inséré dans une zone $Z_j$ déterminée comme décrit précédemment en référence au procédé selon le premier mode de réalisation, ou dans un conduit $k_j$ déterminé comme décrit précédemment en référence au procédé selon le second mode de réalisation.

La figure 5c illustre une vue en coupe selon un axe longitudinal d'un insert 62 selon une variante. Cet insert 62 permet ici de modifier le coefficient géométrique local $\zeta_{x,y}$ et donc le débit dans le conduit concerné. L'insert 62 est ici une portion de plaque structurée, par exemple une tôle d'épaisseur sensiblement constante présentant au moins un bossage 63 qui s'étend en saillie vis-à-vis d'un plan parallèle au plan de la plaque bipolaire. L'insert 62 est disposé dans au moins une partie des conduits 53 de refroidissement de manière à ce que les bossages 63 soient orientés dans le sens longitudinal des conduits. L'insert 62 ne modifie pas le diamètre hydraulique des conduits 63 qui en sont munis mais introduit des pertes de charge singulières, ce qui entraîne une diminution du débit du fluide caloporteur. Chaque insert 62 peut comporter un ou plusieurs bossages 63, répartis de manière périodique ou non, les bossages étant identiques les uns aux autres ou non, selon la répartition spatiale des pertes de charge singulière à générer dans le conduit de refroidissement. Comme pour l'insert 60, il comporte des bordures latérales 61a, 61b par lesquelles il est fixé à la plaque bipolaire 40, au niveau de la jointure entre les deux tôles 62a, 42b. Comme précédemment, l'insert 62 peut être inséré dans une zone $Z_j$ déterminée comme décrit précédemment en référence au procédé selon le premier mode de réalisation, ou dans un conduit $k_j$ déterminé comme décrit précédemment en référence au procédé selon le second mode de réalisation.

Les inserts 60, 62 peuvent être distincts les uns des autres ou former des zones d'une même tôle s'étendant entre les deux tôles 42a, 42b de la plaque bipolaire 40. Ainsi, par la présence des inserts, le circuit de refroidissement présente une résistance hydraulique Rh (ou un coefficient géométrique $\zeta$) répartie selon la distribution spatiale $Rh^f_{x,y}$ déterminée par le procédé selon l'invention.

La figure 6 illustre un exemple de mesure du débit dans des conduits du circuit de refroidissement d'une plaque bipolaire (exprimé ici par la vitesse moyenne du fluide dans chaque conduit). La courbe en trait pointillé correspond au débit dans des conduits de refroidissement d'une plaque bipolaire de référence pour laquelle la résistance hydraulique Rh est répartie spatialement suivant une distribution initiale $Rh^i_{x,y}$. On remarque que le débit dans les conduits n'est pas homogène dans le sens où certains conduits présentent une vitesse sensiblement nulle alors que d'autres conduits présentent un pic de vitesse de l'ordre de 0,35m/s. Ces inhomogénéités de débit du fluide caloporteur se traduisent par des inhomogénéités de la puissance calorifique évacuée $P_{x,y}$, ce qui est susceptible de provoquer de fortes inhomogénéités de température effective au sein de la cellule. La courbe en trait plein correspond au débit dans les conduits de la même plaque bipolaire dans laquelle la résistance hydraulique Rh est répartie spatialement suivant la distribution

$Rh_{x,y}^{f}$ déterminée par le procédé selon l'invention. Pour cela, des inserts 60 et/ou 62 ont été introduits dans les conduits de refroidissement dans les zones $Z_j$ et/ou les conduits $k_j$, comme décrit précédemment. Les fortes inhomogénéités de débit ont été réduites voire supprimées, de sorte que le débit dans le circuit de refroidissement est sensiblement homogène d'un conduit de refroidissement à l'autre. Cela se traduit par une puissance calorifique évacuée $P_{x,y}$ sensiblement homogène, ce qui permet de limiter voire écarter les inhomogénéités de température de la cellule en fonctionnement.

Des modes de réalisation particuliers viennent d'être décrits. Différentes variantes et modifications apparaîtront à l'homme du métier.

**Revendications**

**1.** Procédé de détermination d'une distribution spatiale $(Rh_{x,y}^{f})$ d'un paramètre d'intérêt (Rh) représentatif d'une évacuation de chaleur au sein d'une plaque bipolaire d'une cellule électrochimique, ladite cellule comportant deux électrodes séparées l'une de l'autre par un électrolyte et disposées entre des plaques bipolaires adaptées à amener des espèces réactives aux électrodes et à évacuer de la chaleur produite par la cellule en fonctionnement, les plaques bipolaires étant formées de deux tôles accolées l'une à l'autre, chaque tôle comportant des bossages formant au niveau d'une face dite externe un circuit de distribution d'une espèce réactive, les bossages des tôles formant ensemble, au niveau de faces dites internes opposées aux faces externes, un circuit de refroidissement comportant des canaux de refroidissement qui communiquent fluidiquement entre eux entre une entrée et une sortie du circuit de refroidissement, comprenant les étapes suivantes :

i) fourniture (110 ; 210) d'une cellule électrochimique, au sein de laquelle le paramètre d'intérêt (Rh) est réparti selon une distribution spatiale initiale $(Rh_{x,y}^{i})$, pour laquelle la distribution spatiale d'une température au sein de la cellule électrochimique en fonctionnement présente au moins une valeur locale supérieure ou égale à une valeur locale maximale prédéterminée ;

ii) définition (120 ; 220) d'une distribution spatiale $(T_{x,y}^{c})$ d'une température de consigne ($T^c$) au sein de la cellule en fonctionnement, telle que les valeurs locales de température sont inférieures à des valeurs locales maximales prédéterminées ;

iii) mesure (130; 230) d'une distribution spatiale $(Q_{x,y}^{r})$ d'une première grandeur thermique ($Q^r$) représentative d'une production locale d'énergie thermique au sein de ladite cellule électrochimique en fonctionnement ;

iv) estimation (140 ; 240) d'une distribution spatiale $(D_{x,y}^{e})$ d'une seconde grandeur thermique ($D^e$) représentative d'un débit local d'un fluide caloporteur dans un circuit de refroidissement d'une plaque bipolaire de la cellule électrochimique en fonctionnement, en fonction de ladite distribution spatiale $(T_{x,y}^{c})$ de la température de consigne ($T^c$) et de ladite distribution spatiale $(Q_{x,y}^{r})$ de la première grandeur thermique ($Q^r$), de sorte que la distribution spatiale de température de ladite cellule électrochimique en fonctionnement, dont la première grandeur thermique ($Q^r$) présente ladite distribution spatiale mesurée $(Q_{x,y}^{r})$ et la seconde grandeur thermique ($D^e$) présente ladite distribution spatiale estimée $(D_{x,y}^{e})$, soit sensiblement égale à celle $(T_{x,y}^{c})$ de la température de consigne ($T^c$) ;

v) détermination (150 ; 250) d'une distribution spatiale $(Rh_{x,y}^{f})$ du paramètre d'intérêt (Rh) en fonction de la distribution spatiale estimée $(D_{x,y}^{e})$ de la seconde grandeur thermique ($D^e$),

dans lequel l'étape d'estimation d'une distribution spatiale de la seconde grandeur thermique comporte :

- une phase de réalisation d'un maillage d'un circuit de refroidissement d'au moins une plaque bipolaire de la cellule électrochimique dans lequel est destiné à s'écouler un fluide caloporteur ;
- une phase de simulation numérique par ordinateur de la seconde grandeur thermique, sur ledit maillage, par résolution d'un modèle numérique discret reliant la seconde grandeur thermique à la température locale et à la première grandeur thermique.

**2.** Procédé de détermination selon la revendication 1, dans lequel le paramètre d'intérêt est une résistance hydraulique (Rh) ou un coefficient géométrique ($\zeta$) de pertes de charge singulière au sein d'un circuit de refroidissement d'au moins l'une des plaques bipolaires dans lequel est destiné à circuler un fluide caloporteur.

**3.** Procédé de détermination selon la revendication 1 ou 2, dans lequel l'étape de détermination de la distribution spatiale du paramètre d'intérêt est en outre effectuée en fonction d'une valeur prédéterminée de puissance électrique globale de la cellule électrochimique.

**4.** Procédé de détermination selon l'une quelconque des revendications 1 à 3, dans lequel la première grandeur thermique est représentative d'une production d'énergie thermique ($Q^r$) au sein de la cellule en fonctionnement, et la seconde grandeur thermique est représentative d'un débit ($D^e$) d'un fluide caloporteur dans un circuit de refroidissement d'une plaque bipolaire de la cellule.

**5.** Procédé de détermination selon la revendication 4, dans lequel, lors de l'étape iv), on estime la distribution spatiale $\left(D_{x,y}^e\right)$ du débit ($D^e$) du fluide caloporteur permettant d'évacuer ladite chaleur produite ($Q^r$) selon la distribution spatiale $\left(Q_{x,y}^r\right)$ de manière à obtenir ladite distribution spatiale $\left(T_{x,y}^c\right)$ de la température de consigne ($T^c$).

**6.** Procédé de détermination selon la revendication 5, dans lequel, lors de l'étape v), on détermine la distribution spatiale $\left(Rh_{x,y}^f\right)$ du paramètre d'intérêt (Rh) de manière à ce que le débit du fluide caloporteur dans le circuit de refroidissement présente la distribution spatiale $\left(D_{x,y}^e\right)$ préalablement estimée.

**7.** Procédé de réalisation d'une plaque bipolaire de cellule électrochimique, comportant les étapes dans lesquelles :

• on considère une cellule électrochimique de référence comportant deux électrodes séparées l'une de l'autre par un électrolyte et disposées entre des plaques bipolaires adaptées à amener des espèces réactives aux électrodes et à évacuer de la chaleur produite par la cellule en fonctionnement par un circuit de refroidissement dans lequel est destiné à circuler un fluide caloporteur, le circuit de refroidissement présentant un paramètre d'intérêt (Rh), représentatif une résistance hydraulique (Rh) ou un coefficient géométrique ($\zeta$) de pertes de charge singulières, réparti spatialement selon une distribution initiale $\left(Rh_{x,y}^i\right)$ ;
• on détermine, par le procédé (100 ; 200) selon l'une quelconque des revendications précédentes, une distribution spatiale $\left(Rh_{x,y}^f\right)$ du paramètre d'intérêt (Rh) ;
• on réalise (160 ; 260) ladite plaque bipolaire de sorte que le paramètre d'intérêt (Rh) présente la distribution spatiale $\left(Rh_{x,y}^f\right)$ déterminée.

**8.** Procédé de réalisation d'une plaque bipolaire selon la revendication 7, dans laquelle on ajoute un insert (60) dans au moins un conduit (53) du circuit de refroidissement, ledit insert (60) présentant une épaisseur transversale à un axe longitudinal dudit conduit adapté à augmenter localement la résistance hydraulique du conduit.

**9.** Procédé de réalisation d'une plaque bipolaire selon la revendication 7 ou 8, dans laquelle on ajoute un insert (62) dans au moins un conduit (53) du circuit de refroidissement, ledit insert (62) étant formé d'au moins une portion de plaque d'épaisseur sensiblement constante, comportant au moins un bossage (63) adapté à former localement une perte de charge singulière.

**10.** Procédé de réalisation d'une cellule électrochimique comportant deux électrodes séparées l'une de l'autre par un électrolyte et disposées entre deux plaques bipolaires adaptées à amener des espèces réactives aux électrodes et à évacuer de la chaleur produite par la cellule en fonctionnement, le procédé comportant les étapes suivantes :

- on considère une cellule électrochimique de référence présentant un paramètre d'intérêt (Rh) représentatif de la production d'énergie électrique de la cellule réparti selon une distribution spatiale initiale $(Rh^i_{x,y})$ ;
- on détermine, par le procédé de détermination selon l'une quelconque des revendications 1 à 6, une distribution spatiale $(Rh^f_{x,y})$ du paramètre d'intérêt (Rh) ;
- on réalise la cellule électrochimique sur la base de la cellule électrochimique de référence dans laquelle le paramètre d'intérêt (Rh) présente la distribution spatiale $(Rh^f_{x,y})$ déterminée.

**11.** Support d'enregistrement d'informations, comportant des instructions pour la mise en oeuvre du procédé de détermination selon l'une quelconque des revendications 1 à 6, ces instructions étant aptes à être exécutées par un processeur.

**Patentansprüche**

**1.** Verfahren zum Bestimmen einer räumlichen Verteilung ($Rh^f_{x,y}$) eines interessierenden Parameters (Rh), der für eine Wärmeabfuhr in einer Bipolarplatte einer elektrochemischen Zelle charakteristisch ist, wobei die Zelle zwei Elektroden aufweist, die durch einen Elektrolyten voneinander getrennt sind und zwischen den Bipolarplatten angeordnet sind, die geeignet sind, reaktive Spezies an die Elektroden zu bringen und die von der Zelle im Betrieb erzeugte Wärme abzuführen, wobei die Bipolarplatten aus zwei miteinander verbundenen Blechen gebildet sind, wobei jedes Blech Vorsprünge aufweist, die an einer Außenseite genannten Seite eine Schaltung zum Verteilen einer reaktiven Spezies bilden, wobei die Vorsprünge der Bleche zusammen, an den Innenseiten genannten Seiten, die den Außenseiten gegenüberliegen, einen Kühlkreislauf bilden, der Kühlkanäle aufweist, die zwischen einem Einlass und einem Auslass des Kühlkreislaufs miteinander in Fluidverbindung stehen, das die folgenden Schritte aufweist:

i) Bereitstellen (110; 210) einer elektrochemischen Zelle, in der der interessierende Parameter (Rh) mit einer initialen räumlichen Verteilung ($Rh^i_{x,y}$) verteilt ist, für die die räumliche Verteilung einer Temperatur innerhalb der elektrochemischen Zelle im Betrieb mindestens einen lokalen Wert aufweist, der größer oder gleich einem voreingestellten maximalen lokalen Wert ist;
ii) Definieren (120; 220) einer räumlichen Verteilung ($T^c_{x,y}$) einer Sollwerttemperatur ($T^c$) innerhalb der Zelle im Betrieb, so dass die lokalen Temperaturwerte niedriger sind als voreingestellte maximale lokale Werte;
iii) Messen (130; 230) einer räumlichen Verteilung ($Q^r_{x,y}$) einer ersten Wärmemenge ($Q^r$) die für eine lokale Erzeugung von Wärmeenergie innerhalb der elektrochemischen Zelle im Betrieb charakteristisch ist;
iv) Schätzen (140; 240) einer räumlichen Verteilung ($D^e_{x,y}$) einer zweiten Wärmemenge ($D^e$), die für eine lokale Durchflussrate eines Wärmeübertragungsfluids in einem Kühlkreislauf einer Bipolarplatte der elektrochemischen Zelle im Betrieb in Abhängigkeit von der räumlichen Verteilung ($T^c_{x,y}$) der Solltemperatur ($T^c$) und der räumlichen Verteilung ($Q^r_{x,y}$) der ersten Wärmemenge ($Q^r$) charakteristisch ist, so dass die räumliche Verteilung der Temperatur der elektrochemischen Zelle im Betrieb, deren erste Wärmemenge ($Q^r$) die gemessene räumliche Verteilung ($Q^r_{x,y}$) aufweist, und zweite Wärmemenge ($D^e$) die geschätzte räumliche Verteilung ($D^e_{x,y}$) aufweist, im Wesentlichen gleich der ($T^c_{x,y}$) der Solltemperatur ($T^c$) ist;
v) Bestimmen (150; 250) einer räumlichen Verteilung ($Rh^f_{x,y}$) des interessierenden Parameters (Rh) in Abhängigkeit von der geschätzten räumlichen Verteilung ($D^e_{x,y}$) der zweiten Wärmemenge ($D^e$),

wobei der Schritt des Schätzens einer räumlichen Verteilung der zweiten Wärmemenge aufweist:

- eine Phase des Erzeugens eines Gitters eines Kühlkreislaufs mindestens einer Bipolarplatte der elektrochemischen Zelle, in dem ein Wärmeübertragungsfluid fließen soll;
- eine Phase der computergesteuerten numerischen Simulation der zweiten Wärmemenge in dem Gitter durch Lösen eines diskreten numerischen Modells, das die zweite Wärmemenge mit der lokalen Temperatur und mit der ersten Wärmemenge in Beziehung setzt.

**2.** Bestimmungsverfahren nach Anspruch 1, wobei der interessierende Parameter ein hydraulischer Widerstand (Rh) oder ein geometrischer Koeffizient ($\zeta$) einzelner Druckverluste innerhalb eines Kühlkreislaufs mindestens einer der Bipolarplatten ist, in dem ein Wärmeübertragungsfluid fließen soll.

**3.** Bestimmungsverfahren nach Anspruch 1 oder 2, wobei der Schritt des Bestimmens der räumlichen Verteilung des interessierenden Parameters ferner in Abhängigkeit von einem voreingestellten Wert der gesamten elektrischen Leistung der elektrochemischen Zelle durchgeführt wird.

**4.** Bestimmungsverfahren nach einem der Ansprüche 1 bis 3, wobei die erste Wärmemenge für eine Erzeugung von Wärmeenergie ($Q^r$) innerhalb der Zelle im Betrieb charakteristisch ist, und die zweite Wärmemenge für eine Durchflussrate ($D^e$) eines Wärmeübertragungsfluids in einem Kühlkreislauf einer Bipolarplatte der Zelle charakteristisch ist.

**5.** Bestimmungsverfahren nach Anspruch 4, wobei in Schritt iv) die räumliche Verteilung ($D^e_{x,y}$) der Durchflussrate ($D^e$) des Wärmeübertragungsfluids, das es ermöglicht, die erzeugte Wärme ($Q^r$) abzuführen, in Abhängigkeit von der räumlichen Verteilung ($Q^r_{x,y}$) geschätzt wird, um die räumliche Verteilung ($T^c_{x,y}$) der Solltemperatur ($T^c$) zu erhalten.

**6.** Bestimmungsverfahren nach Anspruch 5, wobei in Schritt v) die räumliche Verteilung ($Rh^f_{x,y}$) des interessierenden Parameters (Rh) so bestimmt wird, dass die Durchflussrate des Wärmeübertragungsfluids in dem Kühlkreislauf die vorher geschätzte räumliche Verteilung ($D^e_{x,y}$) aufweist.

**7.** Verfahren zum Herstellen einer Biopolarplatte einer elektrochemischen Zelle, das die folgenden Schritte aufweist:

• Untersuchen einer elektrochemischen Referenzzelle, die zwei Elektroden aufweist, die durch einen Elektrolyten voneinander getrennt sind und zwischen den bipolaren Platten angeordnet sind, die geeignet sind, reaktive Spezies an die Elektroden zu bringen und die von der Zelle im Betrieb erzeugte Wärme über einen Kühlkreislauf abzuführen, in dem ein Wärmeübertragungsfluid fließen soll, wobei der Kühlkreislauf einen interessierenden Parameter (Rh) aufweist, der für einen hydraulischen Widerstand (Rh) oder einen geometrischen Koeffizienten ($\zeta$) einzelner Druckverluste charakteristisch ist, der gemäß einer initialen Verteilung ($Rh^i_{x,y}$) räumlich verteilt ist;
• Bestimmen einer räumlichen Verteilung ($Rh^f_{x,y}$) des interessierenden Parameters (Rh) unter Verwendung des Verfahrens (100; 200) nach einem der vorhergehenden Ansprüche;
• Herstellen (160; 260) der Bipolarplatte derart, dass der interessierende Parameter (Rh) die bestimmte räumliche Verteilung ($Rh^f_{x,y}$) aufweist.

**8.** Verfahren zur Herstellung einer Bipolarplatte nach Anspruch 7, wobei ein Einsatz (60) in mindestens einen Kanal (53) des Kühlkreislaufs eingesetzt wird, wobei der Einsatz (60) eine Dicke quer zu einer Längsachse des Kanals aufweist, die geeignet ist, den hydraulischen Widerstand des Kanals lokal zu erhöhen.

**9.** Verfahren zum Herstellen einer Bipolarplatte nach Anspruch 7 oder 8, wobei ein Einsatz (62) in mindestens einen Kanal (53) des Kühlkreislaufs eingesetzt ist, wobei der Einsatz (62) aus mindestens einem Plattenabschnitt von im Wesentlichen konstanter Dicke gebildet ist, der mindestens einen Vorsprung (63) aufweist, der geeignet ist, lokal einen einzelnen Druckverlust zu bilden.

**10.** Verfahren zum Herstellen einer elektrochemischen Zelle, die zwei Elektroden aufweist, die durch einen Elektrolyten voneinander getrennt sind und zwischen zwei Bipolarplatten angeordnet sind, die geeignet sind, reaktive Spezies an die Elektroden zu bringen und die von der Zelle im Betrieb erzeugte Wärme abzuführen, wobei das Verfahren die folgenden Schritte aufweist:

- Untersuchen einer elektrochemischen Referenzzelle, die einen interessierenden Parameter (Rh) aufweist, der für die Erzeugung von elektrischer Energie der Zelle charakteristisch ist und gemäß einer initialen räumlichen Verteilung ($Rh^i_{x,y}$) verteilt ist;
- Bestimmen einer räumlichen Verteilung ($Rh^f_{x,y}$) des interessierenden Parameters (Rh) unter Verwendung des Bestimmungsverfahrens nach einem der Ansprüche 1 bis 6;
- Herstellen der elektrochemischen Zelle auf der Grundlage der elektrochemischen Referenzzelle, in der der interessierende Parameter (Rh) die bestimmte räumliche Verteilung ($Rh^f_{x,y}$) aufweist.

**11.** Datenspeichermedium, das Anweisungen zur Implementierung des Bestimmungsverfahrens nach einem der Ansprüche 1 bis 6 aufweist, wobei diese Anweisungen von einem Prozessor ausgeführt werden können.

**Claims**

1. Method for determining a spatial distribution $\left(Rh_{xy}^f\right)$ of a parameter of interest (Rh) representative of heat removal within a bipolar plate of an electrochemical cell, said cell including two electrodes separated from each other by an electrolyte and placed between bipolar plates suitable for bringing reactive species to the electrodes and for removing the heat produced by the cell in operation, the bipolar plates being formed from two sheets that are bonded to each other, each sheet including embossments forming, in what is called an external face, a circuit for distributing a reactive species, the embossments of the sheets together forming, in what are called internal faces that are opposite the external faces, a cooling circuit including cooling channels that communicate fluidically with one another between an inlet and an outlet of the cooling circuit, comprising the following steps:

   i) providing (110; 210) an electrochemical cell, within which the parameter of interest (Rh) is distributed with an initial spatial distribution $\left(Rh_{xy}^i\right)$ and for which the spatial distribution of a temperature within the electrochemical cell in operation has at least one local value higher than or equal to a preset maximum local value;

   ii) defining (120; 220) a spatial distribution $\left(T_{xy}^c\right)$ of a set-point temperature ($T^c$) within the cell in operation, said distribution being such that the local temperature values are lower than preset maximum local values;

   iii) measuring (130; 230) a spatial distribution $\left(Q_{xy}^r\right)$ of a first thermal quantity ($Q^r$) representative of a local production of thermal energy within said electrochemical cell in operation;

   iv) estimating (140; 240) a spatial distribution $\left(D_{xy}^e\right)$ of a second thermal quantity ($D^e$) representative of a local flow rate of a heat-transfer fluid in a cooling circuit of a bipolar plate of the electrochemical cell in operation, depending on said spatial distribution $\left(T_{xy}^c\right)$ of the set-point temperature ($T^c$) and on said spatial distribution $\left(Q_{xy}^r\right)$ of the first thermal quantity (Qr), so that the spatial distribution of the temperature of said electrochemical cell in operation, the first thermal quantity ($Q^r$) of which cell having said measured spatial distribution $\left(Q_{xy}^r\right)$ and the second thermal quantity ($D^e$) of which cell having said estimated spatial distribution $\left(D_{xy}^e\right)$, is substantially equal to that $\left(T_{xy}^c\right)$ of the set-point temperature ($T^c$); and

   v) determining (150; 250) a spatial distribution $\left(Rh_{xy}^f\right)$ of the parameter of interest (Rh) depending on the estimated spatial distribution $\left(D_{xy}^e\right)$ of the second thermal quantity ($D^e$), wherein the step of estimating a spatial distribution of the second thermal quantity includes:

      - a phase of generating a mesh of a cooling circuit of at least one bipolar plate of the electrochemical cell, through which circuit a heat-transfer fluid is intended to flow; and
      - a phase of simulating numerically by computer the second thermal quantity on said mesh, by solving a discrete numerical model relating the second thermal quantity to the local temperature and to the first thermal quantity.

2. Determining method according to Claim 1, wherein the parameter of interest is a hydraulic resistance (Rh) or a geometric coefficient ($\zeta$) of minor head losses within a cooling circuit of at least one of the bipolar plates, through which circuit a heat-transfer fluid is intended to flow.

3. Determining method according to Claim 1 or 2, wherein the step of determining the spatial distribution of the parameter of interest is furthermore carried out depending on a preset overall electrical power value of the electrochemical cell.

4. Determining method according to any one of Claims 1 to 3, wherein the first thermal quantity is representative of a production of thermal energy ($Q^r$) within the cell in operation, and the second thermal quantity is representative of a flow rate ($D^e$) of a heat-transfer fluid through a cooling circuit of a bipolar plate of the cell.

5. Determining method according to Claim 4, wherein, in step iv), the spatial distribution $\left(D^e_{x,y}\right)$ of the flow rate ($D^e$) of the heat-transfer fluid allowing said produced heat ($Q^r$) to be removed is estimated depending on the spatial distribution $\left(Q^r_{xy}\right)$ so as to obtain said spatial distribution $\left(T^c_{xy}\right)$ of the set-point temperature ($T^c$).

6. Determining method according to Claim 5, wherein, in step v), the spatial distribution $\left(Rh^f_{xy}\right)$ of the parameter of interest (Rh) is determined so that the flow rate of the heat-transfer fluid through the cooling circuit has the spatial distribution $\left(D^e_{x,y}\right)$ estimated beforehand.

7. Method for producing an electrochemical-cell bipolar plate, including steps of:

    • considering a reference electrochemical cell, said cell including two electrodes separated from each other by an electrolyte and placed between bipolar plates suitable for bringing reactive species to the electrodes and for removing the heat produced by the cell in operation via a cooling circuit through which a heat-transfer fluid is intended to flow, the cooling circuit having a parameter of interest (Rh) representative of a hydraulic resistance (Rh) or a geometric coefficient ($\zeta$) of minor head losses, said parameter being spatially distributed with an initial distribution ( $Rh^i_{xy}$ );

    • determining a spatial distribution $\left(Rh^f_{xy}\right)$ of the parameter of interest (Rh), using the method (100; 200) according to any one of the preceding claims; and
    • producing said bipolar plate (160; 260), in such a way that the parameter of interest (Rh) has the determined spatial distribution $\left(Rh^f_{xy}\right)$.

8. Method for producing a bipolar plate according to Claim 7, wherein an insert (60) is added to at least one duct (53) of the cooling circuit, said insert (60) having a thickness transverse to a longitudinal axis of said duct suitable for locally increasing the hydraulic resistance of the duct.

9. Method for producing a bipolar plate according to Claim 7 or 8, wherein an insert (62) is added to at least one duct (53) of the cooling circuit, said insert (62) being formed from at least one plate section of substantially constant thickness, including at least one embossment (63) suitable for locally creating a minor head loss.

10. Method for producing an electrochemical cell including two electrodes separated from each other by an electrolyte and placed between two bipolar plates suitable for bringing reactive species to the electrodes and for removing the heat produced by the cell in operation, the method including the following steps of:

    - considering a reference electrochemical cell having a parameter of interest (Rh) representative of the electrical power production of the cell and distributed with an initial spatial distribution $\left(Rh^i_{xy}\right)$;

    - determining a spatial distribution $\left(Rh^f_{xy}\right)$ of the parameter of interest (Rh) using the determining method according to any one of Claims 1 to 6; and
    - producing the electrochemical cell, on the basis of the reference electrochemical cell in which the parameter of interest (Rh) has the determined spatial distribution $\left(Rh^f_{xy}\right)$.

11. Data storage medium containing instructions for implementing the determining method according to any one of Claims 1 to 6, these instructions being executable by a processor.

**Fig.1a**

**Fig.1b**

**Fig.2**

**Fig.3**

$$T^c_{i,j+1}$$
$$D^e_{i,j+1}$$
$$Q^r_{i,j+1}$$

$$d^1_{i,j}$$

$$T^c_{i-1,j} \qquad d^2_{i,j} \qquad T^c_{i,j} \qquad d^3_{i,j} \qquad T^c_{i+1,j}$$
$$D^e_{i-1,j} \qquad\qquad D^e_{i,j} \qquad\qquad D^e_{i+1,j}$$
$$Q^r_{i-1,j} \qquad\qquad Q^r_{i,j} \qquad\qquad Q^r_{i+1,j}$$

$$d^4_{i,j}$$

$$T^c_{i,j-1}$$
$$D^e_{i,j-1}$$
$$Q^r_{i,j-1}$$

y

x

**Fig.4**

**Fig.5a**

**Fig.5b**

**Fig.5c**

**Fig.6**

## EP 3 145 011 B1

**Documents brevets cités dans la description**

- FR 2976732

**Littérature non-brevet citée dans la description**

- **INOUE et al.** Numerical analysis of relative humidity distribution in polymer electrolyte fuel cell stock including cooling water. *J. Power Sources,* 2006, vol. 162, 81-93